# EUROPÄISCHE PATENTSCHRIFT

(11) **EP 3 697 567 B1**
(45) Veröffentlichungstag und Bekanntmachung des Hinweises auf die Patenterteilung: **10.04.2024**
(21) Anmeldenummer: 18789607.1
(22) Anmeldetag: 17.10.2018
(51) Int. Cl.: B24B 27/00, B23Q 11/00, B23D 59/00, B25J 11/00, B24B 29/00, B24B 55/06

(54) **ABSAUGUNG FÜR SCHLEIFWERKZEUG MIT RADIALBÜRSTENSCHEIBE**
EXTRACTION SYSTEM FOR GRINDING TOOL WITH RADIAL DISC BRUSH
ASPIRATION DESTINÉE À UN OUTIL À MEULER COMPRENANT UNE MEULE À BROSSES RADIALES

(30) Priorität: 18.10.2017 DE 102017124326
(43) Veröffentlichungstag der Anmeldung: 26.08.2020
(73) Patentinhaber: FerRobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner, Patentanwälte mbB
(86) Internationale Anmeldenummer: PCT/EP2018/078461
(87) Internationale Veröffentlichungsnummer: WO 2019/077007

(56) Entgegenhaltungen:
- WO-A1-2012/154761
- AT-B- 399 466
- DE-A1- 4 226 681
- DE-A1-102013 202 332
- US-A- 1 359 718
- US-A- 2 394 556

## Beschreibung

### TECHNISCHES GEBIET

Die hier beschriebenen Ausführungsbeispiele betreffen eine Absaugvorrichtung für eine, von einem Manipulator (z.B. Industrieroboter) bediente Werkzeugmaschine zur Absaugung von Material, das von der Werkstückoberfläche abgetragen wird.

### HINTERGRUND

Bei der Bearbeitung Werkstücken spielen robotergestützt durchgeführte Oberflächenbearbeitungsprozesse wie z.B. Schleif- und Polierprozesse eine zunehmend wichtige Rolle. In der automatisierten, robotergestützten Fertigung werden Industrieroboter eingesetzt, mit deren Hilfe z.B. Schleifprozesse austomatisiert werden können. Eine Vorrichtung zum automatischen Bearbeiten von Oberflächen mittels Bandschleifen ist beispielsweise in der Publikation DE 10 2013 202 332 A1 beschrieben.

Bei robotergestützten Bearbeitungsvorrichtungen wird eine Werkzeugmaschine mit rotierendem Werkzeug (z.B. Schleifmaschine mit Schleifscheibe oder Radialbürste) von einem Manipulator, beispielsweise einem Industrieroboter, geführt. Der sogenannte TCP (*Tool Center Point*) des Manipulators bewegt sich während des Bearbeitungsprozesses entlang einer definierten Bahn (Trajektorie), die vorab z.B. mittels Teach-In programmiert werden kann. Die vorgegebene Bahn des TCP bestimmt für jeden Zeitpunkt Position und Orientierung des TCP und damit der Werkzeugmaschine. Die Robotersteuerung, die die Bewegung des Manipulators steuert beinhaltet daher in der Regel eine Positionsregelung. Des Weiteren kann eine Feder oder ein zusätzlicher Aktor vorgesehen sein, die/der das Werkzeug mit einer bestimmten Kraft gegen die Werkstückoberfläche drückt.

Häufig ist eine Absaugung des von der Werkstückoberfläche abgetragenen Materials (z.B. Schleifstaub) gewünscht oder notwendig. Aus diesem Grund kann die Werkzeugmaschine mit einer Absaugvorrichtung ausgestattet sein, welche für eine Absaugung des abgetragenen Materials von der Werkstückoberfläche sorgt. Bekannte Absaugvorrichtungen weisen eine Absaughaube auf, welche das Werkzeug teilweise umgibt. Die Absaughaube ist mit einer Absaugleitung verbunden, über die in der Absaughaube ein Unterdruck erzeugt und loses Material abgesaugt wird. Absaugvorrichtungen mit Absaughaben sind an sich bekannt. Beispielsweise ist in der Publikation AT 399466 B eine Schutzvorrichtung mit Staubabsaugung für Kreissägen beschrieben (gemäß dem Oberbegriff von Anspruch 1). Auch die Publikation WO 2012/154761 A1 betrifft eine Kreissäge. Die Publikation US 1,3159,718 beschreibt eine Schleifmaschine mit Absaugung. Die Publikation US 2,394,556 beschreibt ein Staubsammelsystem für eine Maschine zum Zuschneiden von Baumaterial wie z.B. Ziegel. Die Publikation DE 4226681 beschreibt eine Maschine mit Absaugung und Filter zur Oberflächenreinigung von gesundheitsgefährdende Materialien enthaltenden Gegenständen.

Für die Bearbeitung kleiner oder schmaler Werkstücke oder Werkstücke mit gekrümmten Oberflächen sind Absaugvorrichtungen oft kompliziert zu handhaben oder sind schlicht zu groß, um das Werkstück ordentlich bearbeiten zu können. Auch eine Bearbeitung "kopfüber" (Werkzeug unterhalb der Werkstückoberfläche) ist bei einigen Absaugvorrichtungen problematisch.

Die Erfinder hat es sich zur Aufgabe gemacht, eine verbesserte Absaugvorrichtung für robotergestützte Vorrichtungen zur Oberflächenbearbeitungen zur Verfügung zu stellen.

### ZUSAMMENFASSUNG

Die oben genannte Aufgabe wird durch die Vorrichtung gemäß Anspruch 1 gelöst. Verschiedene Ausführungsbeispiele und Weiterentwicklungen der Erfindung sind Gegenstand der abhängigen Ansprüche.

Es wird eine Absaugvorrichtung für eine robotergestützte Werkzeugmaschine zur Oberflächenbearbeitung beschrieben. Gemäß einem Ausführungsbeispiel weist die Absaugvorrichtung ein Gehäuse mit einer Vakuumdüse und einem Auslass zum Anschluss eines Schlauchs auf. Des Weiteren weist die Absaugvorrichtung eine Aufhängung auf, die das Gehäuse mit einer Montageplatte verbindet und die an der Montageplatte schwenkbar um eine Achse gelagert ist. Ein Gegengewicht ist mit der Aufhängung so verbunden, dass das Gegengewicht das Gewicht des Gehäuses in Bezug auf die Achse im Wesentlichen ausbalanciert. In einem Ausführungsbeispiel weist die Aufhängung ein Koppelviereck auf.

Gemäß einem weiteren Ausführungsbeispiel umfasst die Absaugvorrichtung ein Gehäuse mit einer Vakuumdüse und einem Auslass zum Anschluss eines Schlauchs sowie eine Aufhängung, die das Gehäuse mit einer Montageplatte verbindet und die an der Montageplatte schwenkbar um mindestens eine Achse gelagert ist. Ein Gegengewicht ist mit der Aufhängung so verbunden, dass das Gewicht des Gehäuses um die Achse ein erstes Drehmoment bewirkt und das Gegengewicht um die Achse ein zweites Drehmoment bewirkt, welches das erste Drehmoment zumindest teilweise kompensiert.

Des Weiteren wird eine Vorrichtung zur robotergestützren Bearbeitung von Oberflächen von Werkstücken beschrieben. Gemäß einem Ausführungsbeispiel umfasst die Vorrichtung eine Halterung, die an einem Manipulator montierbar ist, eine mechanisch mit der Halterung gekoppelte Werkzeugmaschine mit einem rotierenden Werkzeug sowie eine an einer Montageplatte schwenkbar montierte Absaugvorrichtung, wobei die Montageplatte Teil der Halterung ist.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. Zu den Abbildungen:
Figur 1 ist eine exemplarische schematische Darstellung einer robotergestützten Schleifvorrichtung mit einer Schleifmaschine, die mit einem Industrieroboter mittels eines kraftgeregelten Linearaktors gekoppelt ist.
Figur 2 ist eine Seitenansicht einer an einem Manipulator montierbaren Schleifvorrichtung mit einer Absaugvorrichtung.
Figur 3 ist eine zu der Seitenansicht aus Fig. 2 gehörende Ansicht von vorne.
Figur 4 ist eine Detailansicht eines Teils der Absaugvorrichtung aus Fig. 2 bzw. 3.
Figur 5 illustriert schematisch ein Beispiel einer ausbalancierten Aufhängung für die Absaugvorrichtung.

### DETAILLIERTE BESCHREIBUNG

Bevor verschiedene Ausführungsbeispiele im Detail erläutert werden, wird zunächst ein allgemeines Beispiel einer robotergestützten Schleifvorrichtung beschrieben. Auch wenn die hier beschriebenen Ausführungsbeispiele anhand einer Schleifvorrichtung erläutert werden, sind diese nicht auf Schleifvorrichtungen beschränkt, sondern vielmehr auf beliebige Vorrichtungen zur spanabhebenden Bearbeitung (*abrasive machining*) von Oberflächen anwendbar, wie beispielsweise Werkzeugmaschinen zum Fräsen, Schleifen, Polieren, etc.

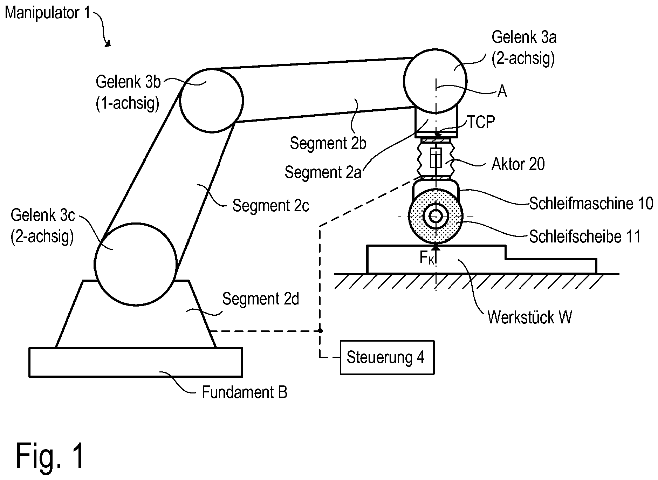

Das in Fig. 1 dargestellte Beispiel umfasst einen Manipulator 1 (beispielsweise einen Industrieroboter) und eine Schleifmaschine 10 mit rotierendem Schleifwerkzeug (Schleifscheibe), wobei die Schleifmaschine 10 mit dem *Tool-Center-Point* (TCP) des Manipulators 1 über einen Linearaktor 20 gekoppelt sein kann (was aber nicht in allen Ausführungsbeispielen der Fall sein muss). Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das erste Segment ist dabei meist starr mit einem Fundament B verbunden (was jedoch nicht zwangsläufig der Fall sein muss). Das Gelenk 3c verbindet die Segmente 2c und 2d. Das Gelenk 3c kann 2-achsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann 2-achsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, dass eine Drehbewegung um eine Längsachse A des Segments 2a ermöglicht (in Fig. 1 als strichpunktierte Line eingezeichnet). Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert. Der TCP kann (in bestimmten Grenzen) beliebig positioniert werden (mit beliebiger Orientierung der Achse A).

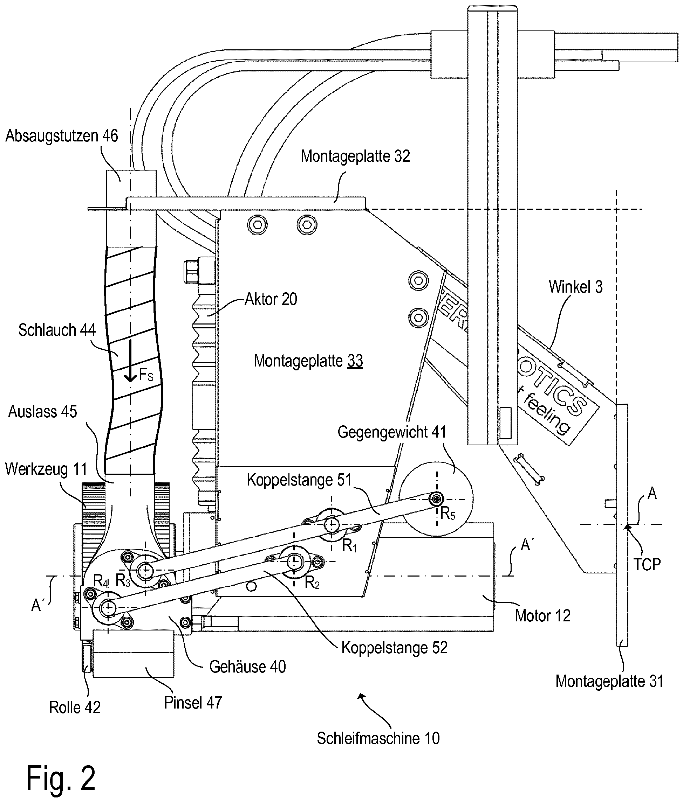

Der Manipulator 1 ist üblicherweise positionsgeregelt, d.h. die Robotersteuerung kann die Pose (Position und Orientierung) des TCP festlegen und diesen entlang einer vordefinierten Trajektorie bewegen. Wenn der Aktor 20 an einem Endanschlag anliegt, ist mit der Pose des TCP auch die Pose des Schleifwerkzeugs definiert. Der Aktor 20 kann dazu verwendet werden, während des Schleifprozesses die Kontaktkraft (Prozesskraft) zwischen Werkzeug (Schleifscheibe 11) und Werkstück W auf einen gewünschten Wert einzustellen. Eine direkte Regelung der Prozesskraft durch den Manipulator 1 kann in vielen Fällen schwierig oder unerwünscht sein, da durch die hohe Massenträgheit der Segmente 2a-2c des Manipulators 1 eine zuverlässige Regelung erschweren. Aus diesem Grund kann die Robotersteuerung dazu ausgebildet sein, die Pose (Position und Orientierung) des TCP zu regeln, während die Regelung der Kontaktkraft (siehe auch Fig. 2, Kontaktkraft F_{K}) ausschließlich vom Aktor 20 bewerkstelligt wird, der zwischen Schleifmaschine 10 und Manipulator 1 gekoppelt ist. Wie erwähnt ist der Aktor 20 nicht in allen Anwendungen notwendig und kann auch weggelassen werden. In manchen Anwendungen kann der Aktor durch eine einfache Feder ersetzt werden.

Im vorliegenden Beispiel ist der Aktor 20 ein pneumatischer Aktor, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben.

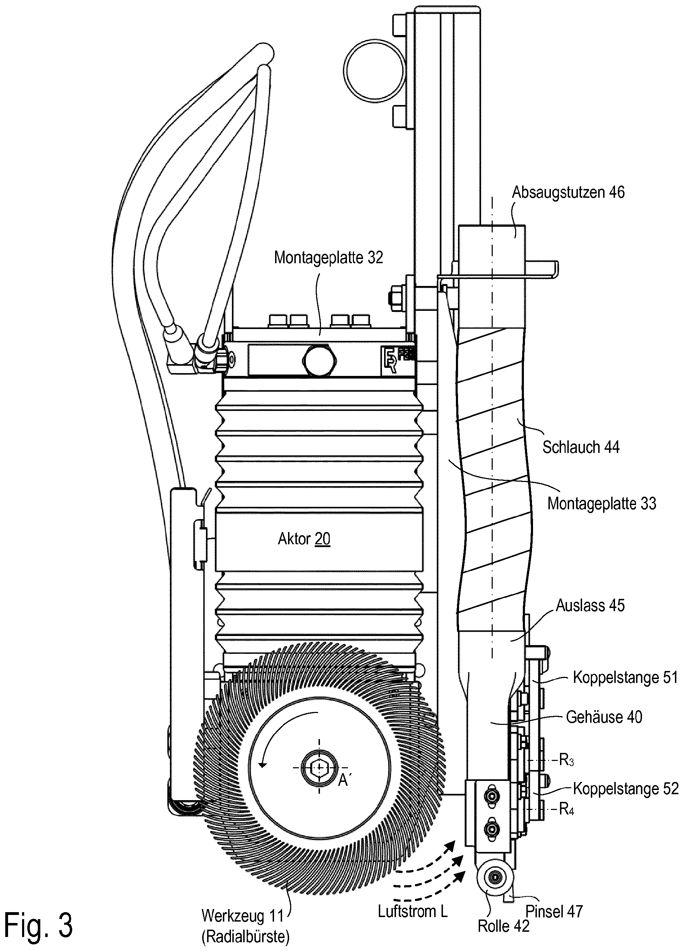

Figur 2 zeigt eine Seitenansicht einer exemplarischen Ausführung einer an einem Manipulator montierbaren Schleifmaschine 10 mit einer Absaugvorrichtung. Fig. 3 die zugehörige Ansicht von vorne. Wie in dem Beispiel aus Fig. 1 ist die Schleifmaschine 10 über einen Linearaktor 20 mit dem Manipulator gekoppelt. In dem in Fig. 2 dargestellten Beispiel ist - anders als in Fig. 1 - die Wirkrichtung des Aktors 20 nicht parallel zu der Längsachse A des Segments 2a des Manipulators (rechts in Fig. 2 dargestellt, vgl. auch Fig. 1) sondern rechtwinklig dazu. Für die Ankopplung des Aktors 20 und der Schleifmaschine 10 an den Manipulator ist ein Winkel 3 (Montagewinkel) vorgesehen, der eine erste Montageplatte 31 (Flansch) und eine zweite Montageplatte 32 aufweist, die jeweils rechtwinklig zueinander liegen. Die Montageplatte 31 ist so ausgestaltet, dass sie an dem Manipulator montiert werden kann. Der TCP des Manipulators liegt in diesem Beispiel an einer Oberfläche der Montageplatte 32 auf der Achse A. Ein erstes Ende des Aktors 20 ist mit der Montageplatte 32 verbunden (z.B. mittels Schrauben) und die Schleifmaschine 10 ist mit einem zweiten Ende des Aktors 20 verbunden (z.B. ebenfalls mittels Schrauben). Im dargestellten Beispiel liegt die Drehachse A` der Motorwelle des Motors 12 der Schleifmaschine 10 rechtwinklig zur Wirkrichtung des Aktors 20 und parallel zur Längsachse A des distalen Segmentes 2A des Roboters. Die Auslenkung des Aktors 20 bestimmt demnach den Normalabstand zwischen den Achsen A und A'. Ein rotierendes Werkzeug 11 ist mit der Motorwelle des Motors 12 der Schleifmaschine 10 verbunden. Im vorliegenden Beispiel ist dies eine Radialbürste (*bristle brush*)*.* Abhängig von der jeweiligen Anwendung kann auch ein anderes Werkzeug vorgesehen sein (z.B. eine Schleifscheibe, ein Schleifband, etc.).

Es sei angemerkt, dass die Achsen A und A' nicht zwangsläufig parallel sein müssen. Des Weiteren müssen die Montageplatten 31 und 32 auch nicht in einem rechten Winkel angeordnet sein. In Fig. 2 kann man sehen, dass die Position der Schleifmaschine 10 lediglich von der Position (inkl. dessen Orientierung) des TCP und der Auslenkung des Aktors 20 anhängt. Eine Steuerung (*Controller,* z.B. die Robotersteuerung) kann - für einen beliebigen bekannten Winkel und einen beliebigen bekannten Abstand zwischen den Montageplatten 31 und 32 - die Position (inkl. Orientierung) der Drehachse A' Motorwelle der Schleifmaschine 10 aus der Position des TCP und der Auslenkung des Aktors 20 bestimmen. In Ausführungsbeispielen ohne Aktor 20 kann aus der Position des TCP durch eine einfache Koordinatentransformation die Position der Motorwelle der Schleifmaschine bestimmt werden.

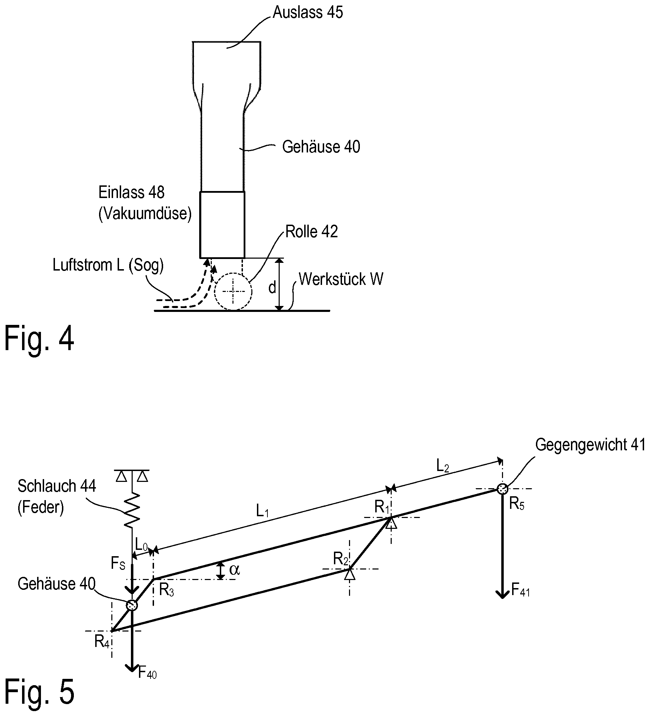

Die Absaugvorrichtung ist an einer Halterung gelagert, die in den vorliegenden Beispielen als Winkel 3 ausgebildet ist. Die erwähnten Montageplatten können (z.B. integraler) Teil der Halterung sein. Im dargestellten Beispiel weist der Winkel 3 eine weitere Montageplatte 33 an der die Absaugvorrichtung gelagert ist. Die Absaugvorrichtung umfasst ein vergleichsweise schmales Gehäuse 40, das ähnlich einer Fugendüse (*vacuum crevice nozzle*) eines Staubsaugers geformt sein kann. Das heißt am unteren Ende des Gehäuses ist eine Vakuumdüse 48 angeordnet, durch welche Staub und andere Partikel eingesaugt werden können. Eine Detailansicht des Gehäuses 40 ist auch in Fig. 4 dargestellt. Neben der Düse am unteren Ende des Gehäuses 40 kann eine Rolle 42 an dem Gehäuse 40 gelagert sein. Die Rolle 42 kann so angeordnet sein, dass Sie im Betrieb an der Werkstückoberfläche abrollt und so einen definierten Abstand d zwischen Gehäuse 40 und Werkstück W gewährleistet. An einer Seite des Gehäuses kann ein Pinsel 47 angeordnet sein, der zusätzlich die bereits bearbeitete Werkstückoberfläche reinigt. Rolle 42 und Pinsel 47 sind jedoch optional und können je nach Anwendung auch weggelassen werden. Das Gehäuse 40 weist an dem der Vakuumdüse 48 gegenüber liegenden Ende (auf der Oberseite) einen Auslass 45 auf, durch den das abgesaugte Material abtransportiert wird. Dazu ist mit dem Auslass 45 ein Schlauch 44 verbunden, der auch an der Winkel (z.B. an der Montageplatte 32) fixiert sein kann. Der Schlauch 44 führt von dem Gehäuse 40 zu der Saugseite eines Gebläses (nicht dargestellt). Geeignete Gebläse sind an sich bekannt und werden daher hier nicht weiter diskutiert.

In Fig. 2 ist die Aufhängung (*suspension*) des Gehäuses 40 an dem Winkel 3 zu sehen. Demnach ist das Gehäuse 40 der Absaugung an der Montageplatte 33 mittels eines ebenen Koppelvierecks (*flat four-bar coupling*) gelagert. Das Koppelvierecks wird im Wesentlichen durch die Koppelstangen 51 und 52 gebildet, welche an der Montageplatte 33 drehbar gelagert sind (Drehachsen R₁ bzw. R₂). Jeweils ein Ende der Koppelstangen 51 und 52 ist auch mit dem Gehäuse 40 drehbar gelagert (Drehachsen R₃ und R₄), wobei im vorliegenden Beispiel die Drehachsen R₁, R₂, R₃ und R₄ so angeordnet sind, dass die Koppelstangen 51 und 52 im Wesentlichen parallel liegen. Eine der Koppelstangen (im vorliegenden Beispiel die Koppelstange 52) ist mit einem Gegengewicht 41 verbunden (Schwerpunkt des Gegengewichts ist mit R₅ bezeichnet). Dieses Gegengewicht 41 befindet sich auf der dem Gehäuse 40 gegenüberliegenden Seite der Drehachse R₁ und ist so dimensioniert, dass es die Gewichtskraft des Gehäuses 40 ausbalanciert. Das heißt, ohne von außen auf das Koppelviereck einwirkende Kraft, wirkt kein Drehmoment auf die Koppelstangen 51 und 52. Das Koppelviereck ist in jeder Lage ausbalanciert, auch wenn die Schleifvorrichtung kopfüber (*upside-down*) betrieben wird. In anderen Worten, das von der Gewichtskraft der Schleifvorrichtung (ohne Schlauch 44) bewirkte Drehmoment auf das Koppelviereck (z.B. um die Drehachse Ri) wird im Wesentlichen kompensiert durch das von der Gewichtskraft des Gegengewichts bewirkte Drehmoment auf das Koppelviereck.

In Fig. 5 sind die auf das Koppelviereck wirkende Kräfte noch einmal dargestellt, wobei ohne Beschränkung der Allgemeinheit angenommen wird, dass die Massen des Gehäuses 40 und des Gegengewichts 41 auf jeweils einen Punkt (Schwerpunkt) konzentriert sind und die Massen der Koppelstangen den Massen des Gehäuses und des Gegengewichts zugeschlagen werden. Das von der Gewichtskraft F₄₀ des Gehäuses 40 bewirkte Drehmoment um die Achse R₁ ist F₄₀·(L₀+L₁)-cos(α), und das von der Gewichtskraft F₄₁ des Gegengewichts 41 bewirkte Drehmoment um die Achse R₁ ist -F₄₁·L₂·cos(α), wobei L₀ der Abstand zwischen Achse R₃ und dem Schwerpunkt ist, an dem die Kraft F₄₀ wirkt. L₁ ist der Abstandzwischen den Achsen R₁ und R₃, und L2 ist der Abstand zwischen der Achse R₁ und dem Schwerpunkt des Gegengewichts 41. Das Koppelviereck ist dann ausbalanciert, wenn F₄₀·(L₀+L₁)·cos(α) - F₄₁·L₂·cos(α) = 0 gilt. Man sieht, dass der Winkel α für die Gleichung keine Rolle spielt und man erhält F₄₁ = F₄₀·(L₀+L₁)/L₂.

Damit das Gehäuse 40 z.B. mit der Rolle 42 gegen die Werkstückoberfläche gedrückt wird, reicht eine sehr geringe Kraft aus, die (anders als die Gewichtskräfte) in jeder Lage in Richtung der Werkstückoberfläche wirkt. Diese geringe Kraft kann z.B. von einem Federelement bewirkt werden, das direkt oder indirekt zwischen dem Winkel 3 (z.B. der Montageplatte 33) und dem Koppelviereck wirkt. In dem in Fig. 2 dargestellten Beispiel wird diese Federkraft F_{S} von dem Schlauch 44 erzeugt, der an den Auslass 45 des Gehäuses 40) angeschlossen ist und an der Montageplatte 32 des Winkels 3 fixiert ist. Die von dem Schlauch 44 bewirkte Federkraft wirkt also zwischen der Montageplatte 32 und dem Gehäuse 40 und damit indirekt auch zwischen der Montageplatte 33 (bzw. dem Winkel 3) und dem Koppelviereck. Diese Situation ist auch in Fig. 5 dargestellt. Die als Dreiecke symbolisierten Auflagerpunkte sind alle starr mit dem Winkel 3 verbunden (d.h. sie liegen auf einer der Montageplatte 32 oder 33).

## Patentansprüche

1. Absaugvorrichtung, die folgendes aufweist:
ein Gehäuse (40) mit einer Vakuumdüse (48) und einem Auslass (45) zum Anschluss eines Schlauchs (44);
eine Aufhängung mit einem Koppelviereck (51, 52), die das Gehäuse (40) mit einer Montageplatte (33) verbindet und die an der Montageplatte (33) schwenkbar um eine Achse (R₁) gelagert ist,
ein Gegengewicht (41), das mit der Aufhängung so verbunden ist, dass das Gewicht des Gehäuses (40) um die Achse (R₁) ein erstes Drehmoment bewirkt und das Gegengewicht um die Achse (R₁) ein zweites Drehmoment bewirkt, welches das erste Drehmoment zumindest teilweise kompensiert,
**dadurch gekennzeichnet, dass** die Absaugvorrichtung ein mit dem Gehäuse (40) oder der Aufhängung gekoppeltes Federelement, welches direkt oder indirekt eine Federkraft (Fs) zwischen Montageplatte (33) und Gehäuse (40) bewirkt, und
eine an dem Gehäuse (40) angeordnete Rolle (42), die dazu ausgebildet ist, im Betrieb eine Werkstückoberfläche zu kontaktieren, wobei das Federelement die Rolle (42) gegen die Werkstückoberfläche drückt, aufweist.

2. Die Absaugvorrichtung gemäß Anspruch 1,
wobei das Federelement ein Schlauch (44) aufweist, welcher an dem Auslass (45) angeschlossen ist.

3. Die Absaugvorrichtung gemäß Anspruch 2,
wobei der Schlauch (44) direkt oder indirekt an der Montageplatte (33) befestigt ist.

4. Die Absaugvorrichtung gemäß einem der Ansprüche 1 bis 3,
wobei das Koppelviereck das Gehäuse (40) und die Montageplatte (33) verbindet.

5. Die Absaugvorrichtung gemäß einem der Ansprüche 1 bis 3,
wobei die Aufhängung eine erste Koppelstange (51) aufweist, welche um die Achse (R₁) schwenkbar an der Montageplatte (33) gelagert ist.

6. Die Absaugvorrichtung gemäß Anspruch 5,
wobei die Aufhängung eine zweite Koppelstange (52) aufweist, welche um eine weitere Achse (R₂) schwenkbar an der Montageplatte (33) gelagert ist, und
wobei die erste Koppelstange (51) und die zweite Koppelstange (52) beide am Gehäuse (40) schwenkbar gelagert sind, sodass sie das Koppelviereck (51, 52) bilden.

7. Die Absaugvorrichtung gemäß Anspruch 5 oder 6,
wobei das Gegengewicht (41) an der ersten Koppelstange (51) befestigt ist.

8. Die Absaugvorrichtung gemäß einem der Ansprüche 1 bis 7, die weiter aufweist: einen an dem Gehäuse (40) angeordneter Pinsel, der dazu ausgebildet ist, im Betrieb eine Werkstückoberfläche zu kontaktieren.

9. Die Absaugvorrichtung gemäß einem der Ansprüche 1 bis 8,
wobei das Gewicht des Gehäuses (40) und das Gegengewicht in Bezug auf die Achse (R₁) im Wesentlichen ausbalanciert sind.

10. Eine Vorrichtung zur Bearbeitung von Oberflächen von Werkstücken, die Vorrichtung weist auf:
eine Halterung (3), die an einem Manipulator (1) montierbar ist,
eine mechanisch mit der Halterung (3) gekoppelten Werkzeugmaschine (10) mit einem rotierenden Werkzeug (11);
eine Absaugvorrichtung gemäß einem der Ansprüche 1 bis 9, wobei die Montageplatte (33) ein Teil der Halterung (3) ist.

11. Die Vorrichtung gemäß Anspruch 10,
wobei das Gehäuse der Absaugvorrichtung in Bezug auf eine Vorschubrichtung der Werkzeugmaschine (10) vor oder hinter dem rotierenden Werkzeug (11) angeordnet ist.

12. Die Vorrichtung gemäß Anspruch 10 oder 11,
wobei das rotierenden Werkzeug (11) eine Schleifscheibe ist.

13. Die Vorrichtung gemäß Anspruch 10 oder 11,
wobei das rotierenden Werkzeug (11) eine Radialbürste ist.

14. Die Vorrichtung gemäß einem der Ansprüche 11 bis 13, die weiter aufweist:
ein Linearaktor (20), der die Werkzeugmaschine (10) mit der Halterung (3) koppelt und der dazu ausgebildet ist, die Werkzeugmaschine (10) relativ zu der Halterung (3) zu bewegen.

## Claims

1. An extraction device, comprising:
a housing (40) with a vacuum nozzle (48) and an outlet (45) for connecting a hose (44);
a suspension with a four-bar coupling (51, 52), which connects the housing (40) to a mounting plate (33) and which is pivotally mounted about an axis (R₁) on the mounting plate (33);
a counterweight (41) connected to the suspension such that the weight of the housing (40) causes a first torque about the axis (R₁) and the counterweight causes a second torque about the axis (R₁), which at least partially compensates the first torque,
**characterized in that** the extraction device has a spring element coupled to the housing (40) or the suspension, which directly or indirectly causes a spring force (F_{S}) between the mounting plate (33) and the housing (40); and
a roller (42) arranged on the housing (40), which is designed to contact a workpiece surface during operation, wherein the spring element presses the roller (42) against the workpiece surface.

2. The extraction device according to claim 1,
wherein the spring element has a hose (44) which is connected to the outlet (45).

3. The extraction device according to claim 2,
wherein the hose (44) is attached directly or indirectly to the mounting plate (33).

4. The extraction device according to any one of claims 1 to 3,
wherein the four-bar coupling connects the housing (40) and the mounting plate (33).

5. The extraction device according to any one of claims 1 to 3,
wherein the suspension has a first coupling rod (51), which is mounted on the mounting plate (33) so that it can pivot about the axis (R₁).

6. The extraction device according to claim 5,
wherein the suspension has a second coupling rod (52), which is pivotally mounted about a further axis (R₂) on the mounting plate (33), and
wherein the first coupling rod (51) and the second coupling rod (52) are both pivotally mounted on the housing (40) so that they form the four-bar coupling (51, 52).

7. The extraction device according to claim 5 or 6,
wherein the counterweight (41) is attached to the first coupling rod (51).

8. The extraction device according to any one of claims 1 to 7, further comprising: a brush arranged on the housing (40) and adapted to contact a workpiece surface during operation.

9. The extraction device according to any one of claims 1 to 8,
wherein the weight of the housing (40) and of the counterweight are substantially balanced with respect to the axis (R₁).

10. A device for processing surfaces of workpieces, wherein the device comprises:
a holder (3) which can be mounted on a manipulator (1);
a machine tool (10) mechanically coupled to the holder (3) with a rotating tool (11);
an extraction device according to any one of claims 1 to 9, wherein the mounting plate (33) is part of the holder (3).

11. The device according to claim 10,
wherein the housing of the extraction device is arranged in front of or behind the rotating tool (11) with respect to a feed direction of the machine tool (10).

12. The device according to claim 10 or 11,
wherein the rotating tool (11) is a grinding disc.

13. The device according to claim 10 or 11,
wherein the rotating tool (11) is a radial brush.

14. The device according to any one of claims 11 to 13, further comprising:
a linear actuator (20) which couples the machine tool (10) to the holder (3) and which is designed to move the machine tool (10) relative to the holder (3).

## Revendications

1. Dispositif d'aspiration, comportant ce qui suit :
un boîtier (40) doté d'une buse à vide (48) et d'une sortie (45) pour connecter un tuyau (44) ;
une suspension dotée d'un carré de couplage (51, 52) qui relie le boîtier (40) à une plaque de montage (33) et qui est montée sur la plaque de montage (33) de manière à pouvoir pivoter autour d'un axe (R₁) ;
un contrepoids (41) qui est relié à la suspension de sorte que le poids du boîtier (40) autour de l'axe (R₁) provoque un premier couple et que le contrepoids autour de l'axe (R₁) provoque un second couple, que le premier couple compense au moins partiellement,
**caractérisé en ce que** le dispositif d'aspiration comporte un élément à ressort couplé au boîtier (40) ou à la suspension, qui provoque directement ou indirectement une force de ressort (F_{S}) entre la plaque de montage (33) et le boîtier (40) ; et
un rouleau (42) disposé sur le boîtier (40) qui est conçu pour venir en contact avec une surface de pièce à usiner pendant le fonctionnement, dans lequel l'élément à ressort presse le rouleau (42) contre la surface de pièce à usiner.

2. Dispositif d'aspiration selon la revendication 1,
dans lequel l'élément à ressort comporte un tuyau (44) qui est relié à la sortie (45).

3. Dispositif d'aspiration selon la revendication 2,
dans lequel le tuyau (44) est fixé directement ou indirectement à la plaque de montage (33).

4. Dispositif d'aspiration selon l'une des revendications 1 à 3,
dans lequel le carré de couplage relie le boîtier (40) et la plaque de montage (33).

5. Dispositif d'aspiration selon l'une des revendications 1 à 3,
dans lequel la suspension comporte une première tige de couplage (51) qui est montée sur la plaque de montage (33) de manière à pouvoir pivoter autour de l'axe (R₁).

6. Dispositif d'aspiration selon la revendication 5,
dans lequel la suspension comporte une seconde tige de couplage (52) qui est montée sur la plaque de montage (33) de manière à pouvoir pivoter autour d'un autre axe (R₂), et
dans lequel la première tige de couplage (51) et la seconde tige de couplage (52) sont toutes deux montées sur le boîtier (40) de manière à pouvoir pivoter, de sorte qu'elles forment le carré de couplage (51, 52).

7. Dispositif d'aspiration selon la revendication 5 ou 6,
dans lequel le contrepoids (41) est fixé à la première tige de couplage (51).

8. Dispositif d'aspiration selon l'une des revendications 1 à 7, qui comporte en outre : une brosse disposée sur le boîtier (40) qui est conçue pour entrer en contact avec une surface de pièce à usiner pendant le fonctionnement.

9. Dispositif d'aspiration selon l'une des revendications 1 à 8,
dans lequel le poids du boîtier (40) et le contrepoids sont sensiblement équilibrés par rapport à l'axe (R₁).

10. Dispositif de traitement de surfaces de pièces à usiner, le dispositif comporte :
un support (3) qui peut être monté sur un manipulateur (1) ;
une machine-outil (10) couplée mécaniquement au support (3) avec un outil rotatif (11) ;
un dispositif d'aspiration selon l'une des revendications 1 à 9, dans lequel la plaque de montage (33) fait partie du support (3).

11. Dispositif selon la revendication 10,
dans lequel le boîtier du dispositif d'aspiration est disposé devant ou derrière l'outil rotatif (11) par rapport à une direction d'avancement de la machine-outil (10).

12. Dispositif selon la revendication 10 ou 11,
dans lequel l'outil rotatif (11) est une meule.

13. Dispositif selon la revendication 10 ou 11,
dans lequel l'outil rotatif (11) est une brosse radiale.

14. Dispositif selon l'une des revendications 11 à 13, qui comporte en outre :
un actionneur linéaire (20) qui couple la machine-outil (10) au support (3) et qui est conçu pour déplacer la machine-outil (10) par rapport au support (3).
